(19) **Europäisches Patentamt**

**European Patent Office**

**Office européen des brevets**

(11) **EP 0 992 454 B1**

(12) **FASCICULE DE BREVET EUROPEEN**

(45) Date de publication et mention de la délivrance du brevet:
**04.12.2002 Bulletin 2002/49**

(51) Int Cl.⁷: **C01B 17/05**, C01B 17/033, C01B 17/02

(21) Numéro de dépôt: **99402244.0**

(22) Date de dépôt: **13.09.1999**

(54) **Procédé et dispositif de traitement d'un gaz contenant de l'hydrogène sulfuré et du dioxyde de soufre, comportant une étape d'elimination de sous-produits solides**

Verfahren und Vorrichtung zur Behandlung von einem Schwefelwasserstoff und Schwefeldioxid enthaltenden Gasstrom, der eine Stufe zur Entfernung von festen Nebenprodukten einschliesst

Process and apparatus for treatment of a gas containing hydrogen sulfide and sulfur dioxide and comprising a step for the removal of solid byproducts

(84) Etats contractants désignés:
**DE ES GB IT NL**

(30) Priorité: **08.10.1998 FR 9812632**

(43) Date de publication de la demande:
**12.04.2000 Bulletin 2000/15**

(73) Titulaire: **INSTITUT FRANCAIS DU PETROLE**
**92852 Rueil-Malmaison Cedex (FR)**

(72) Inventeurs:
- **Lecomte, Fabrice**
  **92500 Rueil Malmaison (FR)**
- **Streicher, Christian**
  **92500 Rueil Malmaison (FR)**

- **Benayoun, Daniel**
  **78500 Sartrouville (FR)**
- **Barrere-Tricca, Cécile**
  **75011 Paris (FR)**

(56) Documents cités:
EP-A- 0 829 452          FR-A- 2 735 460
US-A- 4 565 678          US-A- 4 784 754
US-A- 5 389 351

- BARTHEL, Y. ET AL: "The IFP Clauspol 1500 process. Eight years of industrial experience" , CHEM. ENG. MONOGR. (1979), 10(LARGE CHEM. PLANTS), 69-86 CODEN: CENMDK XP002106750

EP 0 992 454 B1

**Description**

La présente invention a pour objet un procédé de traitement par un solvant d'un effluent gazeux contenant au moins de l'hydrogène sulfuré et du dioxyde de soufre, au cours duquel on prélève des sous-produits formés au cours du procédé de traitement par le solvant.

Le procédé selon l'invention peut notamment être appliqué dans des unités de traitement fonctionnant en aval du procédé Claus.

Le procédé Claus est largement utilisé, notamment en raffinerie (après des unités d'hydrodésulfuration ou de craquage catalytique) et en traitement du gaz naturel, pour récupérer du soufre élémentaire à partir de charges gazeuses contenant de l'hydrogène sulfuré. Cependant les fumées émises par les unités Claus renferment, même après plusieurs étages catalytiques, des quantités non négligeables de gaz acides. Il est alors nécessaire de traiter ces effluents (tail gas) d'unité Claus pour éliminer la majorité des composés toxiques de façon à respecter les normes antipollution. Ces normes devenant de plus en plus sévères, il est indispensable d'améliorer en permanence la technologie existante.

Il est connu, par exemple, de récupérer à partir d'une unité Claus environ 95 % en poids de soufre présent.

Un traitement de cet effluent d'unité Claus avec une unité Clauspol permet d'atteindre par exemple 99.8 % en poids de soufre récupéré, à partir de la réaction exothermique de Claus :

$$2H_2S + SO_2 \leftrightarrow 3S + 2H_2O \qquad \text{réaction (1)}$$

Un tel traitement met en oeuvre un milieu réactionnel constitué par un solvant organique et un catalyseur comprenant un sel alcalin ou alcalino-terreux d'un acide organique. La mise en contact du gaz à traiter et du solvant organique contenant le catalyseur peut s'effectuer à contre-courant ou à co-courant, dans un réacteur-contacteur gaz-liquide vertical ou horizontal dont la température est contrôlée par passage du solvant qui a été soutiré à l'une des extrémités du réacteur-contacteur par une pompé de circulation, dans un échangeur thermique de façon à favoriser le taux le plus élevé de conversion en soufre tout en évitant la formation de soufre solide. Il est connu que dans ce type d'unité, le solvant ayant une capacité limitée à dissoudre le soufre élémentaire, se charge en soufre élémentaire liquide libre que l'on peut séparer du solvant par simple décantation. Cette décantation soufre liquide - solvant s'effectue dans une zone de décantation liquide-liquide, qui peut être placée en fond du réacteur-contacteur. Le soufre est donc récupéré sous forme liquide.

Le fonctionnement d'une telle unité est décrit par exemple dans l'une des références suivantes :

Y. BARTHEL, H. GRUHIER, The IFP Clauspol 1500 process : eight years of industrial experience, Chem. Eng. Monogr., 10 (Large Chem. Plants), 1979, p. 69-86.
HENNICO A., BARTHEL Y., BENAYOUN D., DEZAEL C., Clauspol 300: the new IFP TGT process, For presentation at AIChE Summer National Meeting, Denver (Colo.), August 14-17, 1994.

Il est par ailleurs connu que le taux de désulfuration d'une unité de ce type peut être amélioré en désaturant le solvant en soufre selon un procédé décrit dans le brevet FR 2.735.460 du demandeur. Dans ce cas, une partie de la solution monophasique de solvant et de soufre qui est soutirée à l'extrémité du réacteur-contacteur est refroidie afin de cristalliser le soufre. Ce soufre cristallisé est alors séparé du solvant par divers moyens connus de séparation solide-liquide, tel que la filtration, la décantation ou la centrifugation. On obtient alors d'une part un solvant appauvri en soufre qui peut être recyclé vers le réacteur-contacteur, et d'autre part une suspension enrichie en soufre solide qui peut être réchauffée pour fondre le soufre, puis envoyée dans une zone de décantation liquide-liquide solvant-soufre d'où on récupère le soufre liquide.

Si de tels procédés se révèlent très performants, ils peuvent toutefois être limités par des contraintes.

Par exemple, des réactions secondaires ont lieu dans le réacteur-contacteur conduisant à la formation de sous-produits solides, en majorité des sels tels que les sulfates ou les thiosulfates d'alcalins ou d'alcalino-terreux, provenant par exemple de la dégradation lente du catalyseur. Ces solides ont tendance à s'accumuler et à croître dans la zone de décantation à l'interface entre le solvant organique et le soufre liquide, ce qui rend difficile la décantation du soufre.

Une des manières de remédier à ce problème est décrit dans le brevet FR 2.735.460 qui mentionne la possibilité de faire passer du solvant contenant de tels sels sur un filtre. Les sels se déposent sur le filtre, et le solvant contenant du soufre est envoyé à une étape de désaturation du solvant en soufre. Un tel traitement du solvant en circulation ne suffit cependant pas à éliminer entièrement toute accumulation de ces sels au niveau de l'interface soufre liquide - solvant y compris dans la zone de décantation soufre liquide - solvant située en aval de la zone de désaturation du solvant en soufre.

L'objet de la présente invention est de proposer une manière de procéder et son dispositif associé, dans laquelle on prélève une fraction liquide F contenant les sous-produits solides formés par des réactions secondaires, et on traite cette fraction afin d'éliminer lesdits sous-produits et d'obtenir un solvant pratiquement exempt desdits sous-produits.

Ces sous-produits proviennent par exemple de la dégradation lente du catalyseur.

Le prélèvement peut être réalisé de manière continue, ou discontinue, et en contrôlant l'accumulation de ces sous-produits. On élimine ces derniers par exemple lorsque cette accumulation entraîne une difficulté de décantation du soufre.

Avantageusement le solvant pratiquement exempt de sous-produits solides peut être recyclé vers le réacteur-contacteur où est opéré le traitement du gaz.

L'invention concerne un procédé de traitement d'un gaz contenant au moins de l'hydrogène sulfuré ($H_2S$) et au moins du dioxyde de soufre ($SO_2$) dans lequel on met en contact, à une température adéquate, ledit gaz avec un solvant organique contenant au moins un catalyseur, on récupère un effluent gazeux ne contenant sensiblement plus d'hydrogène sulfuré et de dioxyde de soufre, du soufre liquide séparé du solvant par une décantation liquide-liquide.

Il est caractérisé en ce que :

* une couche comportant des sous-produits est située entre le soufre-liquide et le solvant séparés,
* on prélève au niveau de ladite couche, une fraction liquide F contenant au moins des sous-produits solides, et
* on envoie ladite fraction liquide F à une étape de traitement distincte de l'étape de mise en contact, à l'issue de laquelle on récupère au moins un flux $F_1$ comportant la majorité des sous-produits et un flux $F_2$ composé essentiellement de solvant quasiment exempt de sous-produits.

L'étape de traitement est par exemple réalisée en mettant en oeuvre au moins un des modes opératoires suivants :

a) on envoie une phase aqueuse telle que de l'eau dans des conditions de température, pression et débit qui sont choisies pour solubiliser au moins la majeure partie des sous-produits solides dans la dite phase aqueuse, et pour obtenir au moins une démixion liquide-liquide entre cette phase aqueuse et une phase organique contenant la majorité du solvant prélevé, et/ou

b) on réalise au moins une étape de filtration, et/ou

c) on effectue au moins une étape de captation sur un support solide des sous-produits de manière à récupérer au moins deux phases, une phase constituée essentiellement de solvant appauvri en sous-produits solides et une phase, issue de la régénération du lit de captation, contenant la majorité des sous-produits.

On récupère par exemple au moins une troisième phase essentiellement constituée de soufre au cours du mode opératoire a).

On peut opérer

• les modes de traitement a) ou b) ou c) à une température comprise par exemple entre 120 et 180 °C, et/ou
• le mode de traitement a) à une pression comprise par exemple entre la pression atmosphérique et 1,5 MPa.

Pour réaliser le mode traitement a), on opère par exemple à une température et/ou à une pression choisies de façon à éviter la formation de phase gazeuse.

On contrôle par exemple le positionnement et/ou l'épaisseur de la couche comportant les sous-produits solides.

On envoie, par exemple, au moins une partie du flux $F_2$ composé essentiellement de solvant à une étape de désaturation du solvant en soufre et on recycle, en partie ou en totalité, la phase solvant appauvrie en soufre vers l'étape de mise en contact.

Le procédé peut aussi comporter une étape de chauffage pour favoriser la cristallisation des sous-produits formés.

L'invention concerne aussi un dispositif permettant d'éliminer ou de récupérer des sous-produits formés au cours d'un procédé de traitement d'un effluent gazeux contenant au moins de l'hydrogène sulfuré ($H_2S$) et du dioxyde de soufre ($SO_2$) dans lequel on utilise un solvant et un catalyseur, ledit dispositif comportant au moins un réacteur-contacteur, au moins une zone de séparation, plusieurs lignes d'introduction au moins du gaz à traiter et d'un fluide comportant du solvant et du catalyseur, des lignes d'extraction d'au moins un gaz épuré, et d'un fluide comportant au moins du solvant et des sous-produits.

Il est caractérisé en ce qu'il comporte au moins :

- des moyens de prélèvement d'une fraction essentiellement liquide F comportant au moins des sous-produits solides, lesdits moyens de prélèvement étant en liaison avec une couche de sous-produits solides dans la zone de séparation, et
- au moins une zone de traitement de ladite fraction F.

La zone de traitement est par exemple située à l'extérieur du réacteur-contacteur.

Selon un mode de réalisation, la zone de séparation et lesdits moyens de prélèvement sont situés dans la partie inférieure dudit réacteur-contacteur.

Les moyens de prélèvement sont par exemple disposés sur une ligne reliant ledit réacteur-contacteur et ladite zone de séparation.

La zone de traitement peut comporter au moins un des moyens choisis parmi les suivants

* des moyens de démixion, tels qu'une capacité et une ligne d'introduction d'eau, et/ou
* des moyens de filtration, et/ou
* des moyens de captation, tels que des alumines, des céramiques, du métal, du charbon actif,

lesdits moyens étant adaptés pour produire au moins un flux comportant essentiellement du solvant et au moins un flux comportant essentiellement des sous-produits formés.

Le dispositif peut comporter des moyens de contrôle ($C_{N2}$, $V_2$) de l'épaisseur et/ou des moyens de contrôle ($C_{N1}$, $V_1$) du positionnement de la couche des sous-produits, ou encore des moyens de contrôle ($V_1$, $V_2$).

Il peut aussi comporter une ligne permettant de recycler la majorité au moins du solvant issu de l'étape de traitement.

Le dispositif peut aussi comporter des moyens de désaturation en soufre du solvant, les moyens étant par exemple en liaison avec la ligne de recyclage.

Le réacteur-contacteur est par exemple choisi parmi un des dispositifs donnés dans la liste suivante :

Réacteur avec garnissage vrac ou structuré ou mélangeur statique SMV ou impacteur ou hydro-éjecteur ou atomiseur ou contacteur à fils.

Le procédé et le dispositif selon l'invention sont par exemple appliqués pour le traitement des effluents d'unités Claus traitant de l'$H_2S$ issu d'opérations d'épuration du gaz naturel ou de raffinage du pétrole brut.

Le procédé et son dispositif associé présentent notamment comme avantages :

• de pouvoir améliorer simplement les unités Clauspol existantes par une simple adjonction d'un petit nombre d'équipements de faible taille (car traitant un débit très faible) et donc pour un coût très faible.
• de récupérer un solvant purifié et de le recycler directement vers le procédé de traitement des gaz,
• d'éviter l'accumulation de sous-produits solides au niveau des garnissages équipant certains types de réacteurs-contacteurs.

L'invention sera mieux comprise au vu des figures suivantes illustrant de manière simplifiée et non limitative plusieurs modes avantageux de réalisation du procédé, parmi lesquelles :

- la figure 1 illustre selon un schéma bloc les différents éléments constituant le dispositif selon l'invention, notamment les moyens de prélèvement des sous-produits formés et la zone de traitement,

- la figure 2 illustre un dispositif de traitement de gaz comportant une zone de décantation située dans la partie inférieure d'un réacteur-contacteur,

- la figure 3 montre une variante de réalisation où la zone de traitement est une zone de démixion,

- la figure 4 schématise une autre variante où la zone de traitement est une filtration,

- la figure 5 montre une zone de traitement des sous-produits formés opérant par captation, et

- la figure 6 représente un schéma de l'art antérieur utilisé à titre d'exemple comparatif.

Les modes de réalisation donnés ci-après à titre illustratif et nullement limitatif concernent l'élimination des sous-produits solides formés au cours d'un procédé de traitement d'un gaz contenant au moins de l'hydrogène sulfuré et du dioxyde de soufre. Ces sous-produits proviennent notamment de la dégradation du catalyseur utilisé dans le procédé de traitement du gaz.

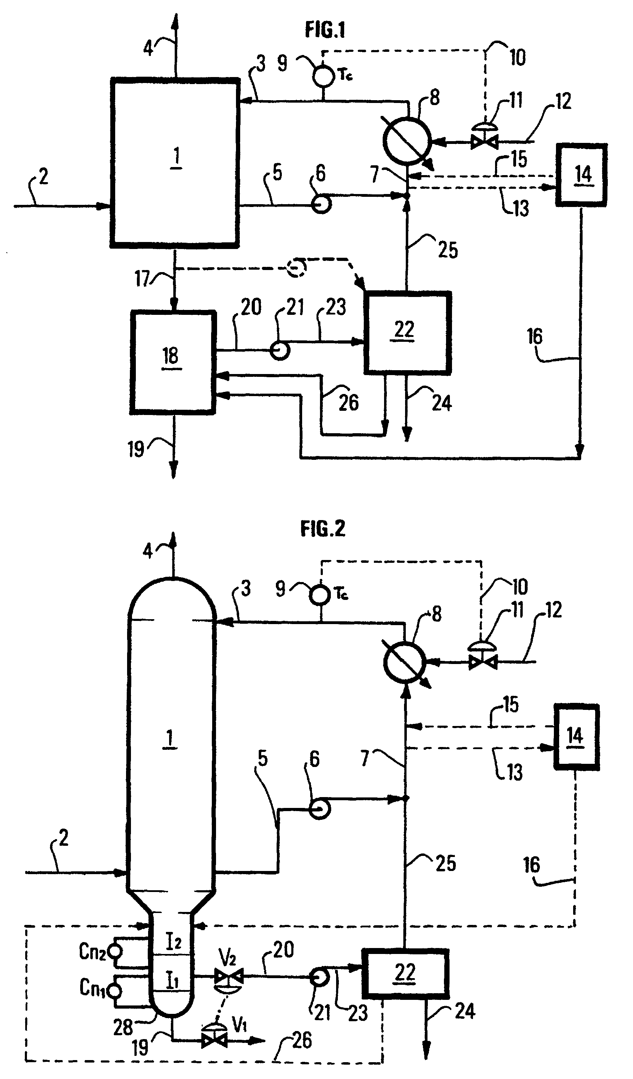

Selon la figure 1, le dispositif comprend un réacteur contacteur 1 gaz-liquide. Une ligne 2 alimente en une charge gazeuse soufrée telle qu'un effluent issu d'une unité Claus le réacteur-contacteur et une ligne 3 introduit par exemple une solution recyclée comprenant un solvant, tel que du polyéthylène glycol 400 et du catalyseur, tel que du salicylate de sodium.

Différents solvants et catalyseurs choisis parmi la liste donnée dans la suite de la description peuvent être utilisés sans sortir du cadre de l'invention.

Le gaz épuré est évacué par une ligne 4.

Une solution monophasique de solvant contenant du catalyseur et du soufre, est soutirée du réacteur contacteur 1 par une ligne 5. Cette solution est ensuite envoyée par une pompe 6 et une ligne 7 vers un échangeur thermique 8 où elle est refroidie à une température adéquate, compatible avec le fonctionnement du réacteur-contacteur, par exemple 120°C. Cette température peut être contrôlée par un régulateur 9 relié à l'échangeur thermique 8 par une ligne 10. La ligne 10 est par exemple en liaison avec une vanne 11 équipant une ligne d'arrivée 12 du fluide réfrigérant dans l'échangeur thermique.

Le solvant refroidi et issu de l'échangeur thermique 8 peut être recyclé vers le réacteur-contacteur 1 par la ligne 3.

Une partie de la solution monophasique de solvant qui circule dans la boucle de recyclage (constituée notamment des éléments 5, 6, 7, 8, 3), par exemple 10 à 20% de la solution, est par exemple prélevée par une ligne 13, à partir de la ligne 7, afin d'être envoyée dans une zone de traitement telle qu'une zone 14 de désaturation du solvant en soufre.

Dans cette zone 14 de désaturation, la solution monophasique est refroidie, par exemple à 60°C, afin de former une suspension de cristaux de soufre dans le solvant. Ce soufre cristallisé est ensuite séparé du solvant par différents procédés de séparation solide-liquide connus de l'Homme du métier, tels que la filtration, la décantation ou la centrifugation. On obtient alors, d'une part un solvant appauvri en soufre extrait par une ligne 15, pour être recyclé par exemple vers le réacteur-contacteur 1, et d'autre part une suspension enrichie en soufre solide. La suspension enrichie en soufre solide peut être réchauffée par des moyens appropriés connus des spécialistes pour fondre le soufre, puis envoyée par une ligne 16 dans une zone de décantation liquide-liquide, décrite ci-après.

Le réacteur-contacteur est par exemple en liaison par une ligne 17 avec une zone de décantation 18. Cette ligne 17 voit éventuellement le passage du solvant envoyé par la ligne 16 dans la zone de décantation 18.

On soutire dans la partie inférieure de cette zone de décantation, le soufre liquide par une ligne 19, pourvue par exemple d'une vanne $V_1$.

La fraction F liquide contenant les sous-produits solides formés est soutirée par des moyens de prélèvement tels qu'une ligne 20, puis envoyée à l'aide d'une pompe 21 éventuellement, et une ligne 23 à une zone de traitement 22 située en dehors du réacteur-contacteur.

La ligne 20 et de manière plus générale les moyens de prélèvement sont disposés par exemple au niveau et/ou au voisinage d'une couche de sous-produits formés qui se trouve entre le solvant et le soufre liquide.

Les moyens de prélèvement 20 peuvent comporter différents dispositifs tels que des vannes et des lignes en liaison avec la zone de décantation dont certaines variantes sont illustrées à la figure 2, à titre indicatif et nullement limitatif. Différents modes de détection et dispositifs connus de l'Homme du métier peuvent être utilisés pour repérer les sous-produits solides.

Ces moyens de prélèvement peuvent être commandés manuellement ou encore être en liaison avec des moyens de détection des sous-produits au niveau de la zone de séparation.

La zone de traitement 22 permet de séparer la fraction liquide F pour obtenir au moins un flux $F_1$ comportant les sous-produits solides qui est soutiré par la ligne 24, un flux $F_2$ composé essentiellement de solvant exempt pratiquement en totalité de sous-produits qui est recyclé par la ligne 25 vers le réacteur-contacteur 1, et éventuellement du soufre liquide qui est envoyé par la ligne 26 dans une zone de décantation 18. Le flux $F_1$ comportant les sous-produits solides soutirés par la ligne 24 sont par exemple dilués dans l'eau avant d'être envoyés au traitement des eaux.

Sans sortir du cadre de l'invention, les moyens de prélèvement des sous-produits au niveau de l'interface peuvent être disposés au niveau de la ligne de liaison 17, selon un schéma représenté en pointillés sur cette figure 1.

La figure 2 schématise une variante de réalisation pour laquelle, la zone de décantation est intégrée au réacteur-contacteur 1.

Les références des éléments identiques à ceux décrits à la figure 1 ont été conservés.

Au niveau de la partie inférieure du réacteur contacteur 1 se trouve une zone de décantation 28.

Au niveau de la zone de décantation, la ligne 19 d'extraction du soufre liquide est pourvue d'une vanne $V_1$ et la ligne 20 de soutirage des sous-produits solides est pourvue d'une vanne $V_2$. La ligne 20 est disposée au niveau d'une couche formée entre le soufre liquide et le solvant par exemple.

Deux moyens tels que des capteurs $C_{N1}$ et $C_{N2}$ disposés au niveau de cette zone de décantation permettent

EP 0 992 454 B1

respectivement de détecter le niveau I1 d'interface soufre liquide-sous-produits solides et l'interface 12 sous-produits solides-solvant.

Au fond de cette zone de décantation, on trouve une couche formée de soufre liquide (première couche) séparée en sa partie supérieure par l'interface I1 d'une couche comportant des sous-produits solides et du solvant (deuxième couche). Cette deuxième couche est séparée en sa partie supérieure par l'interface 12 d'une phase principalement constituée de solvant.

Le capteur $C_{N1}$ est relié par une liaison physique classique à la vanne $V_1$ et le capteur $C_{N2}$ à la vanne $V_2$, afin de contrôler respectivement le positionnement de la couche de sous-produits solides et son épaisseur par rapport aux moyens de prélèvements 20.

Sans sortir du cadre de l'invention, les moyens de prélèvement peuvent aussi comporter plusieurs lignes équipées de vannes permettant de régler le passage de la fraction liquide prélevée.

Les différentes vannes peuvent être contrôlées manuellement par exemple par un contrôle visuel.

Dans les différentes variantes de réalisation données dans cette description, les conditions opératoires de fonctionnement du procédé et du dispositif peuvent être les suivantes :

Le réacteur-contacteur peut opérer à une température choisie pour éviter la formation de soufre solide dans le solvant, par exemple à une température comprise entre 50 à 130°C, et de préférence entre 120 et 122°C. La réaction (1) dans ces conditions est déplacée le plus possible vers la droite et le soufre formé est sous forme liquide pour pouvoir décanter en fond de réacteur. Cette température est par exemple régulée par passage du solvant dans au moins un échangeur thermique.

Le procédé peut être réalisé dans un intervalle de pression très large, par exemple 9,8 kPa à 4,9 MPa. Selon un mode de mise en oeuvre, on opère à la pression atmosphérique.

La mise en oeuvre du procédé peut être réalisée selon n'importe quelle méthode de contactage gaz-liquide et par exemple dans un réacteur-contacteur vertical selon les deux variantes suivantes :

- on opère une mise en contact du gaz à traiter et du solvant à co-courant. Dans ce cas, le gaz à traiter ainsi que le solvant recyclé provenant d'un soutirage latéral en partie inférieure du réacteur-contacteur sont introduits en tête du réacteur-contacteur. L'effluent gazeux est aussi soutiré latéralement, au dessus du solvant à recycler, en partie inférieure du réacteur-contacteur.

    Lorsque l'extrémité inférieure du réacteur-contacteur est reliée à un ballon séparateur, on récupère au fond de ce ballon, le solvant qui est recyclé et en partie latérale de ce ballon le gaz traité.

- on opère une mise en contact du gaz à traiter et du solvant à contre-courant. Dans ce cas le gaz à traiter est introduit latéralement en partie inférieure du réacteur-contacteur, le solvant provenant de la partie inférieure du réacteur-contacteur est recyclé latéralement en partie supérieure. Le soufre est récupéré en fond de réacteur-contacteur tandis que l'effluent gazeux est soutiré en tête.

Le réacteur-contacteur est représenté sur les différentes figures dans une position verticale, mais peut sans sortir du cadre de l'invention être disposé de manière horizontale.

Le réacteur-contacteur peut être formé par tout équipement ou ensemble d'équipements permettant de réaliser une mise en contact d'un gaz et d'un solvant contenant du catalyseur. Il peut être choisi parmi la liste des équipements suivants :

- Réacteur avec garnissage vrac (par exemple des selles Intalox) ou structuré de type Mellapak commercialisé par la société Sulzer,
- Mélangeur statique SMV commercialisé par exemple par la société Sulzer,
- Impacteur commercialisé par exemple par la société AEA,
- Hydro-éjecteur commercialisé par exemple par la société Biotrade,
- Atomiseur commercialisé par exemple par la société LAB,
- Contacteur à fils commercialisé par exemple par la société Toussaint Nyssenne.

Les solvants habituellement utilisés sont les mono- ou poly-alkylènes glycols, les esters de mono- ou poly-alkylènes glycols ou les éthers de mono- ou poly-alkylènes glycols tels que décrits dans les brevets FR 2 115 721 (US 3 796 796), FR 122 674 et FR 2 138 371 (US 3 832 454).

Les catalyseurs sont habituellement ceux décrits dans ces même brevets et plus particulièrement des sels alcalins d'acides organiques faibles tels que l'acide benzoïque et l'acide salicylique.

La concentration du catalyseur dans la phase liquide est avantageusement comprise entre 0.1 et 5% en poids et plus avantageusement entre 0.5 et 2% en poids.

Le traitement dans la zone 22 peut être réalisé de différentes façons dont certaines sont données ci-après à titre illustratif et nullement limitatif.

**Traitement par démixion**

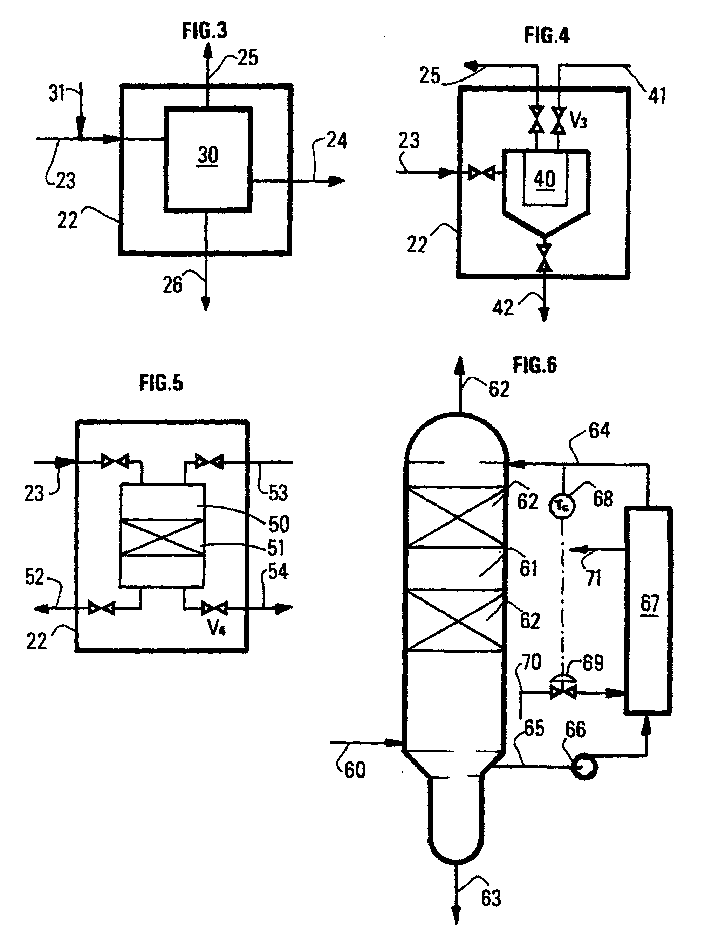

Selon une variante illustrée par la figure 3, qui reprend les mêmes références pour les éléments identiques à ceux de la figure 1, la fraction liquide F prélevée par la ligne 20, est envoyée par la pompe 21 et la ligne 23 (figure 2) dans une zone de traitement 22 opérant par démixion).

Pour cela, la zone de traitement comporte une capacité 30 où se produit la démixion. De l'eau liquide est injectée par une ligne 31 rejoignant la ligne 23 avant la capacité 30, par exemple. L'eau est envoyée par exemple sous une pression de 0,3 MPa et à une température de 120°C.

L'eau dissout le sulfate de sodium et comme le PEG est peu soluble dans la phase aqueuse salée, au moins deux phases liquides apparaissent: une phase aqueuse avec moins de 1% de PEG, et au dessus une phase organique avec moins de 5% de sulfate de sodium. La phase aqueuse est envoyée par la ligne 24 vers le traitement des eaux, et le PEG débarrassé de la majorité des sous-produits solides est renvoyé dans la boucle de recirculation du solvant par la ligne 25. Une troisième phase liquide constituée essentiellement de soufre liquide peut également être présente au fond de la capacité 30. Cette dernière est alors envoyée par la ligne 26 vers la zone de décantation 18.

Selon un mode opératoire, il est possible d'opérer à une température et une pression choisies pour éviter la formation d'une phase gazeuse.

**Traitement par filtration**

Selon une variante illustrée par la figure 4, le traitement dans la zone 22 est réalisé par filtration.

La fraction liquide F prélevée par la ligne 20 est envoyée par la pompe 21 et la ligne 23 (figure 2) dans la zone de traitement 22 comportant des moyens de filtration, par exemple un ou plusieurs filtres 40. Le ou les filtres sont par exemple constitués de cartouches filtrantes à toile déformable.

Les sous-produits solides se déposent sur les filtres alors que le solvant épuré est extrait par la ligne 25 afin d'être recyclé en tête du réacteur-contacteur 1.

Le débatissage des filtres afin d'éliminer les sous-produits déposés se fait en isolant le filtre du circuit de traitement, et en envoyant à l'intérieur des cartouches un fluide, tel que du solvant filtré ou encore de l'eau, introduit sous légère pression par une ligne 41. L'opération de débatissage peut-être commandée lorsque l'épaisseur du gâteau formé est telle que la différence de pression sur la cartouche en filtration devient élevée par exemple comprise entre 0,1 et 0,3 MPa.

Les sous-produits solides sont extraits au fond du filtre par une ligne 42.

On peut aussi disposer d'au moins un second filtre en by-pass du premier afin de continuer à filtrer en continu la fraction F lors du débatissage du premier filtre.

Les moyens permettant d'isoler la zone du reste du circuit de traitement sont connus de l'Homme du métier et ne sont pas détaillés. Ils comportent notamment des vannes d'isolation $V_3$.

**Traitement par captation**

Selon une variante illustrée par la figure 5, la séparation des sous-produits formés est réalisée dans la zone de traitement 22 par captation.

Pour cela la fraction liquide F prélevée par la ligne 20 est envoyée par la pompe 21 et la ligne 23 (figure 2) dans une zone de traitement 22 comportant une capacité 50 contenant des moyens 51 de captation, par exemple un ou plusieurs lits de captation. Les lits sont constitués de solides, par exemple en céramique, en métaux, en oxydes, en métaux, de charbon actif.

La fraction liquide F introduite dans la capacité 50 passe sur le lit 51 de captation qui piège les sous-produits solides, le solvant débarrassé de la majorité des sous-produits sort de la capacité 50 par la ligne 52 pour être recyclé vers le réacteur-contacteur.

Quand le lit de captation est saturé en sous-produits solides, la capacité est isolée du circuit et le lit de captation est régénéré par passage d'eau propre introduite par une ligne 53 et ressort chargée de sous-produits dissous par une ligne 54.

On peut aussi disposer d'au moins une seconde capacité fonctionnant en by-pass de la première pour continuer à capter en continu les sous-produits solides contenus dans la fraction F lors de la régénération des lits de captation de la première capacité par lavage à l'eau par exemple ou bien lors du remplacement des lits de captation.

De même que pour le traitement par filtration, les moyens permettant d'isoler la zone du reste du circuit de traitement sont connus de l'Homme du métier et ne sont pas détaillés. Ils comportent notamment des vannes d'isolation $V_4$.

Dans tous les exemples de réalisation donnés ci-dessus et sans sortir du cadre de l'invention, il est possible de chauffer le solvant pour favoriser la cristallisation des sous-produits formés.

Les moyens de chauffage utilisés sont connus de l'Homme du métier et adaptés pour générer une température suffisante pour favoriser la cristallisation des sous-produits formés.

Par exemple, la température est comprise entre 120 et 180 °C et de préférence entre 120 et 150 °C.

Ils sont disposés en amont de la zone de décantation ou au niveau de cette zone.

Pour des raisons de clarté, les moyens ne sont pas représentés sur la figure.

Des exemples numériques donnés ci-après permettent de mieux faire comprendre les avantages obtenus par les différentes variantes du procédé selon l'invention.

## Exemple 1 donné pour un procédé opérant selon l'art antérieur et illustré selon la figure 6 :

On introduit par une ligne 60 un gaz de queue d'unité Claus, dont le débit est de 12300 Nm$^3$/h, dans un réacteur-contacteur vertical constitué d'une colonne 61 contenant deux lits de garnissage 62 et 63 et on le met en contact à 125°C avec un solvant organique contenant un catalyseur soluble introduit par une ligne 64.

Le garnissage utilisé dans l'exemple est constitué de 2 lits de selles ("Intalox" en céramique de surface spécifique de 250 m$^2$/m$^3$).

Le solvant organique utilisé est un polyéthylène glycol de masse moléculaire 400 et le catalyseur soluble est du salicylate de sodium à une concentration de 100 millimoles/kg de solvant.

Le solvant est recyclé entre le bas et le haut du réacteur-contacteur par les lignes 65 et 64 à un débit de 500 m$^3$/h, grâce à la pompe de circulation 66 à travers un échangeur de température 67, contrôle et régulé en température par un système de mesure-contrôle 68 et 69 permettant d'injecter de l'eau chaude à 80 °C dans l'échangeur par la ligne 70 et de l'évacuer par la ligne 71. La température du solvant recyclée est de 125°C.

Le gaz épuré sort du réacteur-contacteur par la ligne 72. Le soufre formé décante en fond de réacteur-contacteur et est extrait par la ligne 73 à raison de 332 kg/h.

Les compositions des gaz d'entrée et de sortie de l'unité sont données dans le tableau suivant se rapportant à l'art antérieur et à la figure 6 :

| Constituants | Gaz entrée (60) % Vol. | Gaz sortie (62) % Vol. |
|---|---|---|
| $H_2S$ | 1.234 | 0.0586 |
| $SO_2$ | 0.617 | 0.0293 |
| $CO_2$ | 4.000 | 4.038 |
| COS | 0.015 | 0.009 |
| $CS_2$ | 0.015 | 0.009 |
| $S_v$ * | 0.14 | 0.03 |
| $N_2$ | 60 | 60.396 |
| $H_2O$ | 34 | 35.384 |
| Somme des composés soufrés (comptée en soufre) | 2.036 | 0.1449 |

\* Sv = soufre vapeur + soufre vésiculaire

Le rendement en composés soufrés dans le réacteur-contacteur est égal à :

$$\frac{(\% \ composés \ soufrés \ entrée - \% \ composés \ soufrés \ sortie)}{\% \ composés \ soufrés \ entrée} \times 100$$

$$= \frac{(2.036 - 0.1449)}{2.036} \times 100 = 92.88 \ \%$$

Le rendement de l'ensemble unité Claus réalisant 97 % de rendement + unité de finition Clauspol selon l'art antérieur est égal à :

$$97 + \frac{(3 \times 92.88)}{100} = 99.78 \ \%$$

Dans le cas où le dispositif selon l'art antérieur comprend une zone de désaturation du solvant en soufre (non représenté sur les figures), les compositions des gaz d'entrée et de sortie de l'unité sont les suivantes :

| Constituants | Gaz entrée % Vol. | Gaz sortie % Vol. |
|---|---|---|
| $H_2S$ | 1.234 | 0.0247 |
| $SO_2$ | 0.617 | 0.0123 |
| $CO_2$ | 4.000 | 4.038 |
| COS | 0.015 | 0.009 |
| $CS_2$ | 0.015 | 0.009 |
| Sv * | 0.14 | 0.003 |
| $N_2$ | 60 | 60.396 |
| $H_2O$ | 34 | 35.520 |
| Somme des composés soufrés (comptée en soufre) | 2.036 | 0.067 |

\* Sv = soufre vapeur + soufre vésiculaire

Le rendement en composés soufrés dans le réacteur-contacteur est égal à :

$$\frac{(\% \ \textit{composés soufrés entrée - \% composés soufrés sortie})}{\% \ \textit{composés soufrés entrée}} \times 100$$

$$= \frac{(2.036 - 0.067)}{2.036} \times 100 = 96.7 \ \%$$

Le rendement de l'ensemble unité Claus réalisant 97 % de rendement + unité de finition Clauspol selon l'art antérieur est égal à :

$$97 + \frac{(3 \times 96.7)}{100} = 99.9 \ \%$$

On remarque que les teneurs en $H_2S$ et $SO_2$ de sortie de réacteur ont fortement diminué et également que la teneur en soufre vapeur a également sensiblement diminué.

Dans les exemples donnés ci-après, le mot « sel » est employé pour désigner différents sous-produits susceptibles d'être formés notamment par des réactions secondaires du fait de la présence du catalyseur lors d'un procédé de traitement de gaz.

**Exemple 2 étape de prélèvement au niveau de l'interface et séparation des sous-produits dans une zone opérant par démixion figure 3 :**

On utilise le même type de réacteur donné à l'exemple 1 contenant deux lits de selles Intalox en céramique pour réaliser le contact entre le gaz de queue de l'unité Claus avec le même solvant contenant le même catalyseur soluble.

On introduit avec le même débit (12300 $Nm^3/h$) par la ligne 2 le gaz de queue de Claus dans le réacteur et par la ligne 3, le solvant contenant le catalyseur à raison de 500 $m^3/h$ grâce à la pompe 6, la température du solvant étant maintenue à 125°C par l'échangeur 8 alimenté en eau chaude par la ligne 12. Le gaz épuré sort par la ligne 4.

La différence majeure avec l'exemple 1, qui fait l'objet de l'invention, consiste à soutirer en continu une fraction liquide F à raison de 57 l/h au niveau de la couche de sous-produits solides (deuxième couche) dans la zone de décantation 18, 28 et de l'envoyer dans la zone de traitement 22 afin d'éliminer les sous-produits solides, en majorité des sels tels que les sulfates ou les thiosulfates d'alcalins ou d'alcalino-terreux provenant de la dégradation lente du catalyseur.

Dans la zone de traitement 22, de l'eau liquide à 120°C sous 0,3 MPa de pression est mélangée en continu à cette fraction F à raison de 6,8 l/h par la ligne 31. Ceci permet de récupérer trois phases : une phase organique exempte de la majorité des sels, une phase aqueuse contenant environ 250 g/l de sels dissous, et éventuellement une phase soufre. La phase organique est renvoyée en continue par la ligne 25 dans la boucle de circulation du solvant, la phase aqueuse est envoyée par la ligne 24 vers le traitement des eaux et le soufre est envoyé par la ligne 26 dans la zone de décantation 28 située, par exemple en partie inférieure du réacteur-contacteur 1.

### Exemple 3 (figure 4) :

Cet exemple diffère de l'exemple 2 uniquement par sa zone de traitement 22 qui est ici constituée d'un filtre 40 à trois cartouches d'1 $m^2$ de surface chacune. Le débatissage se fait en isolant le filtre du circuit et en envoyant à l'intérieur des cartouches de l'eau sous légère pression par la ligne 41 quand l'épaisseur du gâteau devient supérieure à 3 mm, c'est à dire lorsque la delta de pression sur les cartouches en filtration devient supérieure à 0,2 MPa. Après débatissage, les sels sont récupérés en solution dans l'eau au fond du filtre et envoyés par la ligne 42 vers le traitement des eaux.

Il est intéressant de disposer d'un second filtre, monté en parallèle du premier, afin de pouvoir continuer à filtrer en continu la fraction F lors du débatissage du premier filtre.

### Exemple 4 (figure 5) :

Cet exemple diffère de l'exemple 2 uniquement par sa zone de traitement 22 qui est ici constituée d'une capacité 50 contenant trois lits de captation des sels d'1 $m^3$ chacun en matériau présentant une bonne affinité avec les sels à capter, par exemple des billes d'alumine. Après un mois de fonctionnement en continu, la perte de charge devient supérieure à 0,2 MPa indiquant que les lits de captation sont saturés en sels. La capacité est alors isolée du reste du circuit et les lits de captation sont régénérés par lavage à l'eau qui entre propre par la ligne 53 et ressort chargée de sel par la ligne 54 pour être envoyée vers le traitement des eaux.

Il est intéressant de disposer d'une seconde capacité, montée en parallèle de la première, afin de pouvoir continuer à capter en continu les sels de la fraction F du lavage des lits de la première capacité.

Le procédé et le dispositif selon l'invention sont particulièrement bien adaptés au traitement de gaz ayant une teneur en gaz acides ($H_2S + SO_2$) comprise entre 0.1 et 100% en volume. Il est toutefois particulièrement avantageux pour des gaz ayant une teneur faible en gaz acides ($H_2S + SO_2$) par exemple entre 0.1 et 40 % en volume et plus particulièrement entre 0.5 et 5 % en volume.

### Revendications

**1.** Procédé de traitement d'un gaz contenant au moins de l'hydrogène sulfuré ($H_2S$) et au moins du dioxyde de soufre ($SO_2$) dans lequel on met en contact, à une température adéquate, ledit gaz avec un solvant organique contenant au moins un catalyseur, on récupère un effluent gazeux ne contenant sensiblement plus d'hydrogène sulfuré et de dioxyde de soufre, du soufre liquide séparé du solvant par une décantation liquide-liquide, **caractérisé en ce que** :

* une couche comportant des sous-produits est située entre le soufre-liquide et le solvant séparés,
* on prélève au niveau de ladite couche, une fraction liquide F contenant au moins des sous-produits solides, et
* on envoie ladite fraction liquide F à une étape de traitement distincte de l'étape de mise en contact, à l'issue de laquelle on récupère au moins un flux $F_1$ comportant la majorité des sous-produits et un flux $F_2$ composé essentiellement de solvant quasiment exempt de sous-produits.

**2.** Procédé selon la revendication 1 **caractérisé en ce que** l'étape de traitement est réalisée en mettant en oeuvre au moins un des modes opératoires suivants :

a) on envoie une phase aqueuse telle que de l'eau dans des conditions de température, pression et débit qui sont choisies pour solubiliser au moins la majeure partie des sous-produits solides dans la dite phase aqueuse et pour obtenir au moins une demixion liquide-liquide entre cette phase aqueuse et une phase organique contenant la majorité du solvant prélevé, et/ou

b) on réalise au moins une étape de filtration, et/ou

c) on effectue au moins une étape de captation sur un support solide des sous-produits de manière à récupérer au moins deux phases, une phase constituée essentiellement de solvant appauvri en sous-produits solides et une phase, issue de la régénération du lit de captation, contenant la majorité des sous-produits.

**3.** Procédé selon la revendication 2 **caractérisé en ce que** l'on récupère au moins une troisième phase essentiellement constituée de soufre au cours du mode opératoire a).

**4.** Procédé selon la revendication 2 **caractérisé en ce que** l'on opère

EP 0 992 454 B1

- les modes de traitement a) ou b) ou c) à une température comprise entre 120 et 180°C, et/ou
- le mode de traitement a) à une pression comprise entre la pression atmosphérique et 1,5 MPa.

**5.** Procédé selon la revendication 2 **caractérisé en ce que** l'on choisit la valeur de la température et de la pression pour le mode traitement a) de façon à éviter la formation de phase gazeuse.

**6.** Procédé selon l'une des revendications 1 à 5 **caractérisé en ce que** l'on contrôle le positionnement et/ou l'épaisseur de la couche comportant les sous-produits solides.

**7.** Procédé selon l'une des revendications 1 à 6 **caractérisé en ce que** l'on envoie au moins :

- une partie du flux $F_2$ composé essentiellement de solvant et/ou
- une partie du solvant séparé du soufre liquide

vers l'étape de mise en contact.

**8.** Procédé selon la revendication 7 **caractérisé en ce que** l'on envoie à une étape de désaturation au moins :

- une partie du flux $F_2$ composé essentiellement de solvant et/ou
- une partie du solvant séparé du soufre liquide

**9.** Procédé selon l'une des revendications 1 à 8 **caractérisé en ce qu'**il comporte une étape de chauffage pour favoriser la cristallisation des sous-produits formés.

**10.** Dispositif permettant d'éliminer ou de récupérer des sous-produits formés au cours d'un procédé de traitement d'un effluent gazeux contenant au moins de l'hydrogène sulfuré ($H_2S$) et du dioxyde de soufre ($SO_2$) dans lequel on utilise un solvant et un catalyseur, ledit dispositif comportant au moins un réacteur-contacteur (1), au moins une zone de séparation (17, 18, 28), plusieurs lignes (2, 3) d'introduction au moins du gaz à traiter et d'un fluide comportant du solvant et du catalyseur, des lignes d'extraction (4, 5) d'au moins un gaz épuré, et d'un fluide comportant au moins du solvant et des sous-produits,
**caractérisé en ce qu'**il comporte, au moins :

- des moyens de prélèvement (20) d'une fraction essentiellement liquide F comportant au moins des sous-produits solides, lesdits moyens de prélèvement étant en liaison avec une couche de sous-produits solides dans la zone de séparation, et
- au moins une zone de traitement (22) de ladite fraction F.

**11.** Dispositif selon la revendication 10 **caractérisé en ce que** ladite zone de séparation (28) et lesdits moyens de prélèvement sont situés dans la partie inférieure dudit réacteur-contacteur (1).

**12.** Dispositif selon la revendication 10 **caractérisé en ce que** lesdits moyens (20) de prélèvement sont disposés sur une ligne (17) reliant ledit réacteur-contacteur (1) et ladite zone de séparation (18).

**13.** Dispositif selon l'une des revendications 10 à 12 **caractérisé en ce que** la zone de traitement (22) comporte au moins un des moyens choisis parmi les suivants :

- * des moyens de démixion, tels qu'une capacité (30) et une ligne (31) d'introduction d'eau, et/ou
- * des moyens de filtration (40, 41), et/ou
- * des moyens (50, 51) de captation, tels que des alumines, des céramiques, du charbon actif,

lesdits moyens étant adaptés pour produire au moins un flux comportant essentiellement du solvant et au moins un flux comportant la majorité des sous-produits formés.

**14.** Dispositif selon l'une des revendications 10 à 12 **caractérisé en ce qu'**il comporte au moins des moyens de contrôle ($C_{N2}$, $V_2$) de l'épaisseur et/ou des moyens de contrôle ($C_{N1}$, $V_1$) du positionnement de la couche des sous-produits, des moyens de contrôle ($V_1$, $V_2$).

**15.** Dispositif selon l'une des revendications 10 à 14 **caractérisé en ce qu'**il comporte une ligne (25, 7) permettant de recycler au moins une partie du flux $F_2$ composé essentiellement de solvant et/ou une partie du solvant séparé du soufre liquide vers le réacteur-contacteur (1).

16. Dispositif selon la revendication 10 à 15 **caractérisé en ce qu'**il comporte des moyens de désaturation en soufre de ladite partie du flux $F_2$ et/ou de ladite partie du solvant séparé du soufre liquide vers le réacteur-contacteur.

17. Dispositif selon l'une des revendications 10 à 16 **caractérisé en ce que** ledit réacteur-contacteur est choisi parmi la liste suivante : réacteur avec garnissage vrac ou structuré ou mélangeur statique SMV ou impacteur ou hydro-éjecteur ou atomiseur ou contacteur à fils.

18. Application du procédé selon l'une des revendications 1 à 9 ou du dispositif selon l'une des revendications 10 à 17 au traitement des effluents d'unités Claus traitant de l'$H_2S$ issu d'opérations d'épuration du gaz naturel ou de raffinage du pétrole brut.

**Patentansprüche**

1. Behandlungsverfahren eines wenigstens Schwefelwasserstoff ($H_2S$) und wenigstens Schwefeldioxid ($SO_2$) enthaltenden Gases, bei dem man bei einer geeigneten Temperatur, dieses Gas mit einem organischen, wenigstens einen Katalysator enthaltenden Lösungsmittel kontaktiert, man einen im wesentlichen keinen Schwefelwasserstoff und Schwefeldioxid mehr enthaltenden gasförmigen Abstrom und flüssigem Schwefel gewinnt, der durch ein Flüssig-Flüssig-Dekantieren vom Lösungsmittel getrennt ist, **dadurch gekennzeichnet, dass**:

   • eine Nebenprodukte umfassende Schicht zwischen dem Flüssigschwefel und dem Lösungsmittel, die getrennt sind, liegt,

   • auf dem Niveau dieser Schicht eine wenigstens feste Nebenprodukte enthaltende Flüssigfraktion F entnommen wird und

   • diese Flüssigfraktion F in einer von der Kontaktierungsstufe verschiedenen Behandlungsstufe geschickt wird, ausgehend von der man wenigstens einen Strom $F_1$, der die Mehrheit der Nebenprodukte umfasst, und einen Strom $F_2$ gewinnt, der im wesentlichen aus Lösungsmittel und quasi nebenproduktfrei zusammengesetzt ist.

2. Verfahren nach Anspruch 1, **dadurch gekennzeichnet, dass** die Behandlungsstufe unter Einsatz von wenigstens einer der folgenden Vorgehensweisen durchgeführt wird:

   a) eine wässrige Phase wie Wasser wird in Temperatur-, Druck- und Durchsatzbedingungen geschickt, welche zum Lösen wenigstens des größeren Teils der festen Nebenprodukte in der wässrigen Phase und zum Erhalten wenigstens einer Flüssig-Flüssig-Entmischung zwischen dieser wässrigen Phase und einer den größeren Teil des entnommenen Lösungsmittels enthaltenden organischen Phase gewählt sind, und/oder

   b) wenigstens eine Filtrierungsstufe durchgeführt wird und/oder

   c) wenigstens eine Stufe zum Einfangen der Nebenprodukte auf einem festen Träger derart durchgeführt wird, dass man wenigstens zwei Phasen gewinnt, eine im wesentlichen aus Lösungsmittel bestehende Phase, die an festen Nebenprodukten verarmt ist, und eine Phase aus der Regenerierung des Einfangbettes, die den größeren Teil der Nebenprodukte enthält.

3. Verfahren nach Anspruch 2, **dadurch gekennzeichnet, dass** man wenigstens eine dritte im wesentlichen aus Schwefel bestehende Phase bei der Vorgehensweise a) gewinnt.

4. Verfahren nach Anspruch 2, **dadurch gekennzeichnet, dass** man vornimmt:

   • die Behandlungsweisen a) oder b) oder c) bei einer Temperatur zwischen 120 und 180°C und/oder

   • die Behandlungsweise a) bei einem Druck zwischen dem Atmosphärendruck und 1,5 MPa.

5. Verfahren nach Anspruch 2, **dadurch gekennzeichnet, dass** man den Temperatur- und Druckwert für die Behandlungsweise a) derart wählt, dass die Gasphasenbildung vermieden wird.

6. Verfahren nach einem der Ansprüche 1 bis 5, **dadurch gekennzeichnet, dass** man die Positionierung und/oder die Dicke der die festen Nebenprodukte umfassenden Schicht regelt.

7. Verfahren nach einem der Ansprüche 1 bis 6, **dadurch gekennzeichnet, dass** man wenigstens

   • einen Teil des Stroms F2, der im wesentlichen aus Lösungsmittel besteht, und/oder

   • einen Teil des von Flüssigschwefel getrennten Lösungsmittels

   zur Kontaktstufe schickt.

8. Verfahren nach Anspruch 7, **dadurch gekennzeichnet, dass** man zu einer Entsättigungsstufe wenigstens schickt:

   • eine Teil des Stroms F2, der im wesentlichen aus Lösungsmittel besteht, und/oder

   • eine Teil des von Flüssigschwefel getrennten Lösungsmittels.

9. Verfahren nach einem der Ansprüche 1 bis 8, **dadurch gekennzeichnet, dass** es eine Heizstufe umfasst, um die Kristallisation der gebildeten Nebenprodukte zu begünstigen.

10. Vorrichtung, die es ermöglicht, die bei einem Behandlungsverfahren eines wenigstens Schwefelwasserstoff ($H_2S$) und wenigstens Schwefeldioxid ($SO_2$) enthaltenden Gases, bei dem man ein Lösungsmittel und einen Katalysator verwendet, gebildeten Nebenprodukte zu entfernen, wobei die Vorrichtung wenigstens einen Kontaktreaktor (1), wenigstens eine Trennzone (17, 18, 28), mehrere Leitungen (2, 3) zur Einführung wenigstens eines zu behandelnden Gases und eines Lösungsmittel und Katalysator umfassenden Fluids, Abzugsleitungen (4,5) wenigstens eines gereinigten Gases und eines wenigstens Lösungsmittel und Nebenprodukte umfassenden Fluids umfasst, **dadurch gekennzeichnet, dass** sie wenigstens umfasst:

    • Entnahmemittel (20) einer wenigstens feste Nebenprodukte umfassenden Flüssigfraktion F, welche in Verbindung mit einer Schicht von festen Nebenprodukten in der Trennzone stehen, und

    • Wenigstens eine Behandlungszone (22) der Fraktion F.

11. Vorrichtung nach Anspruch 10, **dadurch gekennzeichnet, dass** die Trennzone (28) und die Entnahmemittel in dem unteren Teil des Kontaktreaktors (1) angeordnet sind.

12. Vorrichtung nach Anspruch 10, **dadurch gekennzeichnet, dass** die Entnahmemittel (20) auf einer Leitung (17) angeordnet sind, die den Kontaktreaktor (1) und die Trennzone (18) verbindet.

13. Vorrichtung nach einem der Ansprüche 10 bis 12, **dadurch gekennzeichnet, dass** die Behandlungszone (22) wenigstens ein unter den folgenden gewähltes Mittel umfasst:

    • Entmischungsmittel wie ein Fassungsvermögen (30) und eine Leitung (31) zur Wassereinführung und/oder

    • Filtermittel (40,41) und/oder

    • Einfangmittel (50, 51) wie Aluminiumoxide, Keramiken, Aktivkohle,

    wobei die Mittel zur Herstellung wenigstens eines im wesentlichen Lösungsmittel umfassenden Storms und wenigstens eines die Mehrheit der gebildeten Nebenprodukte umfassenden Storms ausgelegt sind.

14. Vorrichtung nach einem der Ansprüche 10 bis 12, **dadurch gekennzeichnet, dass** sie wenigstens Mittel ($C_{N2}$, $V_2$) zur Regelung der Dicke und/oder Mittel ($C_{N1}$, $V_1$) zur Regelung der Position der Schicht der Nebenprodukte und Mittel ($V_1$, $V_2$) zur Regelung umfasst.

15. Vorrichtung nach einem der Ansprüche 10 bis 14, **dadurch gekennzeichnet, dass** sie eine Leitung (25, 7) umfasst, die es ermöglicht, wenigstens einen Teil des im wesentlichen aus Lösungsmittelzusammengesetzten Stroms $F_2$ und/oder wenigstens einen Teil des von Flüssigschwefel getrennten Lösungsmittels zum Kontaktreaktor (1) zu rezyklieren.

16. Vorrichtung nach einem der Ansprüche 10 bis 15, **dadurch gekennzeichnet, dass** sie Mittel zum Entsättigen an Schwefel von dem Teils des Stroms $F_2$ und/oder dem Teils des von Flüssigschwefel bei dem Kontaktreaktor getrennten Lösungsmittels.

17. Vorrichtung nach einem der Ansprüche 10 bis 16, **dadurch gekennzeichnet, dass** der Kontaktreaktor (1) aus der folgenden Liste gewählt ist: Reaktor mit losem oder strukturiertem Füllkörper oder statischer Mischer SMV oder Impinger oder Hydroejektor oder Flüssigkeitszerstäuber oder Kontaktierer mit Drähten.

18. Verwendung eines Verfahrens nach einem der Ansprüche 1 bis 9 und einer Vorrichtung nach einer der Ansprüche 10 bis 17 zur Behandlung der Abströme von Clauseinheiten, die $H_2S$ aus Naturgasreinigungsvorgängen oder Rohölraffinierungsvorgängen behandeln.

**Claims**

1. A method for processing a gas containing at least hydrogen sulfide ($H_2S$) and at least sulfur dioxide ($SO_2$), wherein said gas is contacted, at a suitable temperature, with an organic solvent containing at least one catalyst, a gaseous effluent substantially containing no hydrogen sulfide and no sulfur dioxide any more is recovered, liquid sulfur separated from the solvent by liquid-liquid decantation, **characterized in that**:

   - a layer comprising by-products is situated between the liquid sulfur and the solvent that have been separated,

   - a liquid fraction F containing at least solid by-products is extracted from said layer, and

   - said liquid fraction F is sent to a processing stage distinct from the contacting stage, after which at least a stream $F_1$ comprising most of the by-products and a stream $F_2$ mostly comprising solvent nearly free of by-products are recovered.

2. A method as claimed in claim 1, **characterized in that** the processing stage is carried out using at least one of the following procedures :

   a) sending an aqueous phase such as water under temperature, pressure and flow rate conditions selected to solubilize at least most of the solid by-products in said aqueous phase and to obtain at least liquid-liquid demixing between this aqueous phase and an organic phase comprising most of the solvent extracted, and/or

   b) carrying out at least one filtering stage, and/or

   c) carrying out at least one stage of capture of the by-products on a solid support so as to recover at least two phases, one phase essentially consisting of solvent depleted in solid by-products and a second phase, resulting from regeneration of the capture bed, containing most of the by-products.

3. A method as claimed in claim 2, **characterized in that** at least a third phase essentially consisting of sulfur is recovered during procedure a).

4. A method as claimed in claim 2, **characterized in that**:

   - procedures a) or b) or c) are carried out at a temperature ranging between 120 and 180°C, and/or

   - procedure a) is carried out at a pressure ranging between atmospheric pressure and 1.5 MPa.

5. A method as claimed in claim 2, **characterized in that** the value of the temperature and of the pressure of procedure a) is selected to prevent formation of a gas phase.

6. A method as claimed in any one of claims 1 to 5, **characterized in that** the position and/or the thickness of the layer comprising the solid by-products is controlled.

7. A method as claimed in any one of claims 1 to 6, **characterized in that** at least:

   - part of stream $F_2$ mostly consisting of solvent and/or

   - part of the solvent separated from the liquid sulfur

   is sent to the contacting stage.

8. A method as claimed in claim 7, **characterized in that** at least:

   - part of stream $F_2$ mostly consisting of solvent and/or

   - part of the solvent separated from the liquid sulfur

   is sent to a desaturation stage.

9. A method as claimed in any one of claims 1 to 8, **characterized in that** it comprises a heating stage for favouring crystallization of the by-products formed.

10. A device allowing to remove or to recover by-products formed during processing of a gaseous effluent containing at least hydrogen sulfide ($H_2S$) and sulfur dioxide ($SO_2$) wherein a solvent and a catalyst are used, said device comprising at least one contactor reactor (1), at least one separation zone (17, 18, 28), several lines (2, 3) for delivery of at least the gas to be processed and of a fluid comprising a solvent and a catalyst, lines (4, 5) for extraction of at least a cleaned gas and of a fluid containing at least solvent and by-products, **characterized in that** it comprises at least:

    - means (20) for extracting an essentially liquid fraction F comprising at least solid by-products, said extraction means being connected to a layer of solid by-products in the separation zone, and

    - at least one zone (22) for processing said fraction F.

11. A device as claimed in claim 10, **characterized in that** said separation zone (28) and said extraction means are situated in the lower part of said contactor reactor (1).

12. A device as claimed in claim 10, **characterized in that** said extraction means (20) are arranged on a line (17) connecting said contactor reactor (1) and said separation zone (18).

13. A device as claimed in any one of claims 10 to 12, **characterized in that** processing zone (22) comprises at least one of the means selected from the following means:

    - demixing means such as a capacity (30) and a water supply line (31), and/or

    - filtering means (40, 41), and/or

    - capture means (50, 51) such as aluminas, ceramics, activated charcoal,

    said means being suited to produce at least one stream essentially comprising solvent and at least one stream comprising most of the by-products formed.

14. A device as claimed in any one of claims 10 to 12, **characterized in that** it comprises at least means ($C_{N2}$, $V_2$) for controlling the thickness and/or means ($C_{N1}$, $V_1$) for controlling the position of the layer of by-products, or control means ($V_1$, $V_2$).

15. A device as claimed in any one of claims 10 to 14, **characterized in that** it comprises a line (25, 7) allowing to recycle at least part of stream $F_2$ essentially consisting of solvent and/or part of the solvent separated from the liquid sulfur to contactor reactor (1).

**16.** A device as claimed in any one of claims 10 to 15, **characterized in that** it comprises means for sulfur desaturation of said part of stream $F_2$ and/or of said part of the solvent separated from the liquid sulfur.

**17.** A device as claimed in any one of claims 10 to 16, **characterized in that** said contactor reactor is selected from the following list : reactor with random or stacked packing, or static mixer SMV, or impactor, or hydro-ejector, or atomizer, or wire contactor.

**18.** Application of the method as claimed in any one of claims 1 to 9 and of the device as claimed in any one of claims 10 to 17 for processing of effluents from Claus plants processing $H_2S$ from natural gas scrubbing operations or crude oil refining operations.

**FIG.1**

**FIG.2**

# FIG.3

# FIG.4

# FIG.5

# FIG.6